# EUROPEAN PATENT APPLICATION

(11) **EP 4 773 665 A1**
(43) Date of publication of application: **08.07.2026**
(21) Application number: 24869930.8
(22) Date of filing: 28.06.2024
(51) Int. Cl.: H04W 28/26

(54) **SLOT RESOURCE RESERVATION METHOD, AND COMMUNICATION DEVICE AND STORAGE MEDIUM**

(30) Priority: 27.09.2023 CN 202311272732
(71) Applicant: ZTE CORPORATION, Shenzhen, Guangdong 518057 (CN)
(72) Inventor: PENG, Shaofu, Shenzhen, Guangdong 518057 (CN); CHEN, Xiao, Shenzhen, Guangdong 518057 (CN)
(74) Representative: Perronace, Andrea
(86) International application number: PCT/CN2024/102546
(87) International publication number: WO 2025/066371

(57) **Abstract**

Provided in the present application are a slot resource reservation method, and a communication device and a storage medium. The method comprises: acquiring a slot correlation, which corresponds to a first orchestration period length and is regarding an outlet port and an inlet port, between every two adjacent nodes in a target routing path, the first orchestration period length and a slot length, which are supported by each port, and a forwarding delay of each node, and on the basis of the slot correlation, which corresponds to the first orchestration period length and is regarding the outlet port and the inlet port, between every two adjacent nodes, the first orchestration period length and slot length, which are supported by each port, and the forwarding delay of each node, reserving a slot resource for each node in the target routing path.

## Description

### CROSS-REFERENCE TO RELATED APPLICATIONS

The present application claims priority to Chinese Patent Application No. 202311272732.1, titled "Slot Resource Reservation Method, and Communication Device and Storage Medium", filed with the China National Intellectual Property Administration on September 27, 2023, the entire contents of which are incorporated herein by reference.

### TECHNICAL FIELD

Embodiments of the present disclosure relate to, but are not limited to, the field of communication technologies, and in particular, to a time slot resource reservation method, a communication device, and a storage medium.

### BACKGROUND

Time slot resources refer to the time slots included in an orchestration period with a specific length. Each node in the network can be configured with multiple orchestration periods of different lengths, but the nodes need to communicate with each other based on orchestration periods of the same length. To ensure that the estimated residence time of a service flow at each node aligns with the budgeted value, appropriate outgoing time slot resources are generally reserved on the egress ports of each node.

In existing technologies, a technical scheme for time slot resource allocation is provided. For example, by directly detecting the time slot mapping relationship between a specific pair of egress port pairs of adjacent nodes in the network or by detecting the phase difference between the orchestration periods of egress port pairs of adjacent nodes, the time slot mapping relationship between any other adjacent node egress port pairs is derived, thereby reserving corresponding time slot resources on the egress ports of each node for the service flow. However, for the various time slot mapping relationship detection methods mentioned above, the detected mapping relationship primarily reflects the mapping between the outgoing time slots of the upstream node's egress port and the ongoing sending time slots of the local node's egress port. When the local node has a large number of egress ports, to meet the forwarding requirements of various service packets, a large number of time slot mapping relationships need to be calculated. This not only complicates and reduces the efficiency of the time slot resource reservation process but also unnecessarily wastes network resources.

### SUMMARY

Embodiments of the present disclosure provide a time slot resource reservation method, a communication device, and a storage medium.

In a first aspect of the present disclosure, an embodiment provides a time slot resource reservation method, including: acquiring, in a target routing path, a time slot relative relationship corresponding to a first orchestration period length for an egress port and an ingress port between each pair of adjacent nodes, the first orchestration period length and a time slot length supported by each port, and a forwarding delay of each node; and reserving time slot resources for each node in the target routing path according to the time slot relative relationship corresponding to the first orchestration period length for the egress port and the ingress port between each pair of adjacent nodes, the first orchestration period length and the time slot length supported by each port, and the forwarding delay of each node.

In a second aspect of the present disclosure, an embodiment provides a communication device, including: a memory, a processor, and a computer program stored on the memory and executable on the processor, where the processor, when executing the computer program, implements the aforementioned time slot resource reservation method.

In a third aspect of the present disclosure, an embodiment provides a computer-readable storage medium, storing computer-executable instructions, where the computer-executable instructions are used to execute the aforementioned time slot resource reservation method.

### DESCRIPTION OF DRAWINGS

FIG. 1 is a schematic diagram of a network topology for a time slot resource reservation method provided by an embodiment of the present disclosure;
FIG. 2 is a flowchart of a time slot resource reservation method provided by an embodiment of the present disclosure;
FIG. 3 is a schematic diagram of a detection process of a time slot mapping relationship provided by an embodiment of the present disclosure;
FIG. 4 is a flowchart of time slot mapping relationship calculation provided by an embodiment of the present disclosure;
FIG. 5 is a schematic diagram of a detection process of an orchestration period phase difference provided by an embodiment of the present disclosure;
FIG. 6 is a flowchart of another time slot mapping relationship calculation provided by an embodiment of the present disclosure;
FIG. 7 is a flowchart of a method for Step S120 in FIG. 4;
FIG. 8 is a schematic diagram of a network topology for calculating reservation of time slot resources provided by an embodiment of the present disclosure;
FIG. 9 is a flowchart of a time slot resource reservation method provided by another embodiment of the present disclosure;
FIG. 10 is a schematic diagram of a sub-TLV structure carrying a time slot mapping relationship between an egress port and an ingress port of adjacent nodes provided by an embodiment of the present disclosure;
FIG. 11 is a schematic diagram of yet another sub-TLV structure carrying a time slot mapping relationship between an egress port and an ingress port of adjacent nodes provided by an embodiment of the present disclosure;
FIG. 12 is a schematic diagram of a sub-TLV structure carrying an orchestration period phase difference between an egress port and an ingress port of adjacent nodes provided by an embodiment of the present disclosure;
FIG. 13 is a schematic diagram of yet another sub-TLV structure carrying an orchestration period phase difference between an egress port and an ingress port of adjacent nodes provided by an embodiment of the present disclosure;
FIG. 14 is a flowchart of a time slot resource reservation method provided by another embodiment of the present disclosure;
FIG. 15 is a flowchart of a time slot resource reservation method provided by another embodiment of the present disclosure;
FIG. 16 is a schematic diagram of a sub-TLV structure carrying a forwarding delay provided by an embodiment of the present disclosure;
FIG. 17 is a schematic diagram of a TLV structure carrying a time slot mapping relationship provided by an embodiment of the present disclosure;
FIG. 18 is a schematic diagram of yet another TLV structure carrying a time slot mapping relationship provided by an embodiment of the present disclosure;
FIG. 19 is a schematic diagram of a TLV structure carrying an orchestration period phase difference provided by an embodiment of the present disclosure;
FIG. 20 is a schematic diagram of yet another TLV structure carrying an orchestration period phase difference provided by an embodiment of the present disclosure;
FIG. 21 is a schematic diagram of a TLV structure carrying an orchestration period length and time slot length provided by an embodiment of the present disclosure;
FIG. 22 is a schematic diagram of a TLV structure carrying a forwarding delay provided by an embodiment of the present disclosure.

### DETAILED DESCRIPTION

To make the objectives, technical schemes, and advantages of the present disclosure clearer, the following further describes the present disclosure in detail with reference to the accompanying drawings and embodiments. It should be understood that the specific embodiments described herein are merely for explaining the present disclosure and are not intended to limit the present disclosure.

It should be noted that although a logical order is shown in the flowchart, in some cases, the steps shown or described may be performed in an order different from that in the flowchart. The terms "first," "second," and the like in the specification and the above drawings are used to distinguish similar objects and are not necessarily used to describe a specific order or sequence.

Unless otherwise defined, all technical and scientific terms used herein have the same meanings as commonly understood by those skilled in the art of the present disclosure. The terminology used herein is for the purpose of describing embodiments of the present disclosure and is not intended to limit the present disclosure.

First, several terms involved in the present disclosure are explained:
Service Burst Interval: The traffic specification of a deterministic service flow generally follows the pattern of generating a certain burst amount within a cyclic burst interval (i.e., the service burst interval). For example, if a service flow generates 1000 bits of traffic every 1 ms, its corresponding service burst interval is 1 ms.

Orchestration Period: The orchestration period adopted based on the requirements of all deterministic services, allocates time slot resources to services within the orchestration period, i.e., determines which time slots within the orchestration period a service occupies and how many bits the service occupies within those time slots. The length of the orchestration period is the least common multiple of all service burst intervals and is an integer multiple of the service burst intervals. The entire network can be configured with multiple orchestration period instances of different lengths, and each node communicates based on the same orchestration period instance.

Scheduling Period: For a specific orchestration period instance, the scheduling period is a cyclic period of the time-division multiplexing scheduling mechanism actually implemented by the forwarding hardware of a port, which includes a fixed number of time slots. The scheduling period is less than or equal to the orchestration period, depending on the hardware capability.

Time Slot: The orchestration period contains many equal-length time slots. For example, if the length of the orchestration period is 1 ms, it contains 100 time slots, each with a length of 10 µs. For orchestration periods of the same length, different nodes can configure different time slot lengths for the orchestration period instance and accordingly with a different number of time slots.

Incoming Time Slot: For the head node of a specific path, when a packet received from the source client side arrives at the UNI port (i.e., the port facing the user side), the corresponding time slot at the UNI port after traffic conditioning is the incoming time slot of the packet. For an intermediate node in a specific path, the outgoing time slot assigned by the upstream node when sending the packet is the incoming time slot of the packet.

Outgoing Time Slot: For an intermediate node in a specific path, when the intermediate node continues to send a packet to the downstream node, the intermediate node selects a specified time slot to send the packet based on resource reservation or certain rules. This time slot is the outgoing time slot.

Ongoing Sending Time Slot: In the case of continuing to send a packet received from the ingress port to the downstream node, when the tail end of the incoming time slot to which the packet belongs arrives at the egress port, the time slot currently in the sending state at the egress port is the ongoing sending time slot. It should be noted that the ongoing sending time slot is not the outgoing time slot.

The present disclosure provides a time slot resource reservation method, a communication device, and a storage medium. In the embodiments of the present disclosure, upon obtaining the time slot relative relationship corresponding to the first orchestration period length for the egress port and ingress port between every two adjacent nodes in the target routing path, the first orchestration period length and time slot length supported by each port, and the forwarding delay of each node, the time slot resources can be reserved for each node in the target routing path based on the time slot relative relationship corresponding to the first orchestration period length for the egress port and ingress port between every two adjacent nodes, the first orchestration period length and time slot length supported by each port, and the forwarding delay of each node. That is to say, the embodiments of the present disclosure do not need to obtain the time slot relative relationships of each egress port pair between adjacent nodes. Instead, they can reserve time slot resources for each node based on the time slot relative relationship corresponding to the first orchestration period length for the egress port and ingress port between every two adjacent nodes. Therefore, the computational load for time slot relative relationships can be effectively reduced, the processing complexity of time slot resource reservation can be effectively lowered, thereby improving the processing efficiency of time slot resource reservation, and reducing the waste of network resources.

The embodiments of the present disclosure are further described below in conjunction with the accompanying drawings.

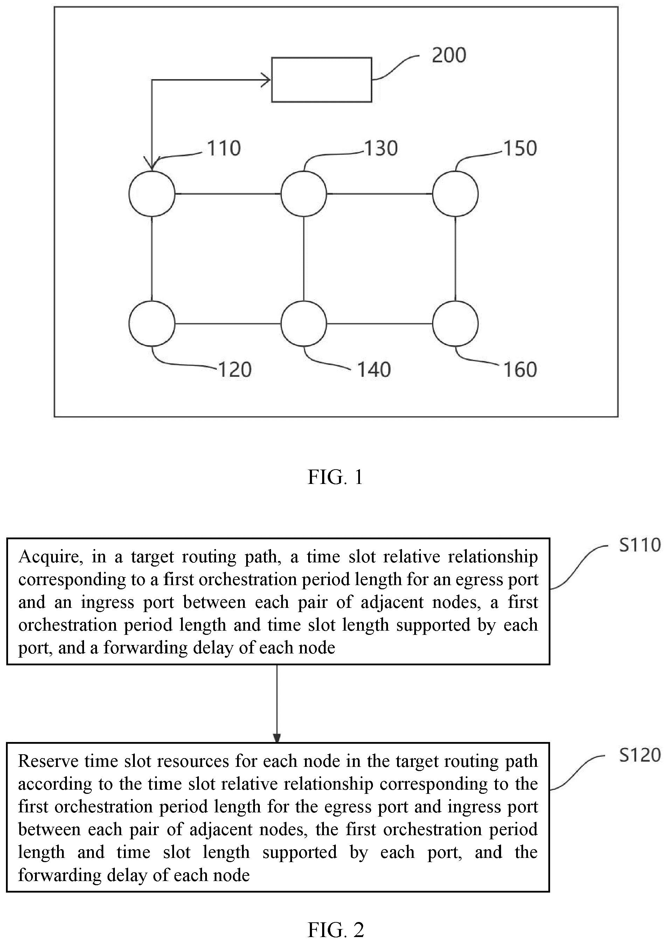

As shown in FIG. 1, FIG. 1 is a schematic diagram of a network topology for executing a time slot resource reservation method provided by an embodiment of the present disclosure. In the example of FIG. 1, the network topology includes six nodes, labeled 110 to 160. The connection between the nodes is as shown in FIG. 1. Among them, the first node 110, the second node 120, the third node 130, the fourth node 140, the fifth node 150, and the sixth node 160 can be network devices such as routers or switches, capable of forwarding packets. Additionally, the network topology may also include a network controller 200, such as a Software Defined Network (SDN) controller, etc. As shown in FIG. 1, the network controller 200 is bidirectionally connected to the first node 110 and can control the first node 110. It should be noted that the network controller 200 can be connected to each node in the network topology to control the connected nodes. Furthermore, the head node or the network controller 200 in the network topology can obtain all data of each node and link in the network topology.

The first node 110, the second node 120, the third node 130, the fourth node 140, the fifth node 150, the sixth node 160, and the network controller 200 each include a memory and a processor, where the memory and the processor can be connected via a bus or other means.

The memory, as a non-transitory computer-readable storage medium, can be used to store non-transitory software programs and non-transitory computer-executable programs. Additionally, the memory may include high-speed random access memory and may also include non-volatile memory, such as at least one magnetic disk storage device, flash memory device, or other non-volatile solid-state storage device. In some implementations, the memory may include memory remotely located relative to the processor, and these remote memories can be connected to the processor via a network. Examples of the aforementioned network include, but are not limited to, the Internet, intranets, local area networks, mobile communication networks, and combinations thereof.

The network topology and application scenarios described in the embodiments of the present disclosure are intended to illustrate the technical schemes of the embodiments of the present disclosure more clearly and do not constitute limitations on the technical schemes provided by the embodiments of the present disclosure. Those skilled in the art will appreciate that, as network topologies evolve and new application scenarios emerge, the technical schemes provided by the embodiments of the present disclosure are applicable to similar technical problems.

Those skilled in the art can understand that the various nodes and topology structures shown in FIG. 1 do not constitute limitations on the embodiments of the present disclosure and may include more or fewer components than those illustrated, or combine certain components, or arrange components differently.

In the network topology shown in FIG. 1, each node may respectively invoke its stored time slot resource reservation program to execute the time slot resource reservation method; or, the network controller may invoke its stored time slot resource reservation program and cooperate with each node to execute the time slot resource reservation method.

Based on the aforementioned network topology and the structure of each node and network controller within the network topology, various embodiments of the time slot resource reservation method of the present disclosure are proposed.

As shown in FIG. 2, which is a flowchart of a time slot resource reservation method provided by an embodiment of the present disclosure, the time slot resource reservation method may be applied to a node or network controller in the network topology shown in FIG. 1, such as the first node 110 in the network topology shown in FIG. 1. The time slot resource reservation method includes, but is not limited to, Step S110 and Step S120.

Step S110: acquiring, in a target routing path, a time slot relative relationship corresponding to a first orchestration period length for an egress port and an ingress port between each pair of adjacent nodes, a first orchestration period length and time slot length supported by each port, and a forwarding delay of each node.

In this step, within the mechanism of time slot scheduling, the time slot relative relationship corresponding to the first orchestration period length for the egress port and ingress port between each pair of adjacent nodes can be obtained through a detection protocol. The time slot relative relationship may include the time slot mapping relationship or the orchestration period phase difference. Here, the time slot mapping relationship can be acquired through a single time slot detection message and is generally perceived and maintained by the downstream node among adjacent nodes when processing the detection message. The orchestration period phase difference can be obtained through a phase difference detection message for the orchestration periods. Additionally, the ports of each node can be configured with different time slot lengths based on the same orchestration period, resulting in corresponding different numbers of time slots. The time slots can be incoming time slots, outgoing time slots, or ongoing sending time slots, etc., which are not exhaustively listed here. The forwarding delay of each node refers to the maximum delay experienced by a packet from the ingress port to the egress port of the local node, excluding the queuing delay on the egress port of the local node and the propagation delay on the link.

Furthermore, the ports of each node in the network can support the configuration of multiple orchestration period lengths and time slot lengths, but communication between nodes is based on orchestration periods of the same length. Since the length of the orchestration period is determined based on the requirements of deterministic services, the first orchestration period in Step S110 is only used to illustrate that in this embodiment, message transmission between nodes is based on orchestration periods of the same length and does not involve any special designation of the first orchestration period.

In an implementation, the network may include multiple nodes. When there are multiple nodes in the network, each node is interconnected with an adjacent node thereof to form multiple links. Each node has multiple egress ports and ingress ports. The connection manner between the egress port of one node and the egress port of an adjacent node is not unique; however, the connection between the egress port of one node and the ingress port of an adjacent node is unique, forming a 1:1 time slot relative relationship.

In an implementation, the network includes multiple nodes and a network controller. The multiple nodes are interconnected within the network to form multiple links, and the network controller is connected to one of the nodes. Here, each link is a bidirectional link. It is understandable that the information in the link, including the orchestration period phase difference between adjacent nodes, the orchestration period lengths and time slot lengths supported by each port, as well as the forwarding delay of each node, etc., is flooded throughout the network via network protocols.

Here, the information in the link is acquired by the head node or the network controller. When the link information is flooded in the network, the head node can learn, through the flooding process, the time slot mapping relationships or phase differences of the orchestration periods between adjacent nodes across the entire network, the orchestration period lengths and time slot lengths supported by each port, as well as the forwarding delay information of nodes and link propagation delays, etc. Alternatively, a target node can be selected from among multiple nodes to establish a connection with the network controller. For example, a node P is selected from the network to establish a Border Gateway Protocol - Link State (BGP-LS) session with the network controller. Subsequently, the node P learns the link information of the entire network through the process of link information being flooded in the network, and then reports this link information to the network controller. Thus, the network controller can acquire the link information of the entire network. It is understandable that BGP-LS is a method for collecting network topology, used to summarize the network topology information collected by the Interior Gateway Protocol (IGP) and deliver it to the upper-layer network controller.

Step S120: reserving time slot resources for each node in the target routing path according to the time slot relative relationship corresponding to the first orchestration period length for the egress port and ingress port between each pair of adjacent nodes, the first orchestration period length and time slot length supported by each port, and the forwarding delay of each node.

In this step, the time slot relative relationship corresponding to the first orchestration period length for the egress port and ingress port may include the time slot mapping relationship or the orchestration period phase difference; reserving time slot resources for each node in the target routing path means that, at the ingress node of the target routing path, corresponding outgoing time slot resources are reserved on the egress port for the service flow with a specific arrival time, while at the intermediate nodes of the target routing path, corresponding outgoing time slot resources are reserved on the egress port for the service flow with a specific incoming time slot, thereby ensuring that the estimated residence time of the service flow at each node aligns with the budgeted value.

In an embodiment, when the acquired time slot relative relationship between two adjacent nodes corresponding to the first orchestration period length for the egress port and ingress port is a time slot mapping relationship, the time slot mapping relationship corresponding to the first orchestration period length for the egress port and egress port between each pair of adjacent nodes can be calculated based on the time slot mapping relationship, the first orchestration period length and time slot length supported by each port, and the forwarding delay of each node. Then, according to the time slot mapping relationship corresponding to the first orchestration period length for the egress port and egress port between each pair of adjacent nodes, and the forwarding delay of each node, time slot resources are reserved for each node in the target routing path.

It should be noted that the time slot mapping relationship corresponding to the first orchestration period length for the egress port and ingress port between two adjacent nodes includes the egress port information for the upstream node, the first transmission time slot of the egress port of the upstream node, the ingress port information for the downstream node, the second transmission time slot of the ingress port of the downstream node, and the remaining time from the moment when the tail end of the first transmission time slot of the egress port of the upstream node is mapped to the second transmission time slot of the ingress port of the downstream node to the end time of the second transmission time slot of the ingress port of the downstream node. Here, the first transmission time slot of the egress port of the upstream node refers to a transmission time slot within the orchestration period of the first orchestration period length on the egress port of the upstream node, and the second transmission time slot of the ingress port of the downstream node refers to a transmission time slot within the orchestration period of the first orchestration period length on the ingress port of the downstream node.

Furthermore, the time slot mapping relationship corresponding to the first orchestration period length for the egress ports between two adjacent nodes includes the egress port information for the upstream node, the third transmission time slot of the egress port of the upstream node, the egress port information for the downstream node, the fourth transmission time slot of the egress port of the downstream node, and the remaining time from the moment when the tail end of the third transmission time slot of the egress port of the upstream node is mapped to the fourth transmission time slot of the egress port of the downstream node to the end time of the fourth transmission time slot of the egress port of the downstream node. Here, the third transmission time slot of the egress port of the upstream node refers to a transmission time slot within the orchestration period of the first orchestration period length on the egress port of the upstream node, and the fourth transmission time slot of the egress port of the downstream node refers to a transmission time slot within the orchestration period of the first orchestration period length on the egress port of the downstream node.

In yet another embodiment, when the acquired time slot relative relationship between two adjacent nodes corresponding to the first orchestration period length for the egress port and ingress port is the orchestration period phase difference, the time slot mapping relationship corresponding to the first orchestration period length for the egress port and egress port between each pair of adjacent nodes can be calculated based on this orchestration period phase difference, the first orchestration period length and time slot length supported by each port, and the forwarding delay of each node. Then, according to the time slot mapping relationship corresponding to the first orchestration period length for the egress port and egress port between each pair of adjacent nodes, and the forwarding delay of each node, time slot resources are reserved for each node in the target routing path.

It should be noted that the orchestration period phase difference corresponding to the first orchestration period length for the egress port and ingress port between two adjacent nodes includes the egress port information for the upstream node, the ingress port information for the downstream node, and the remaining time from the moment when the tail end of the orchestration period of the egress port of the upstream node is mapped to the orchestration period of the ingress port of the downstream node to the end time of the orchestration period of the ingress port of the downstream node. Here, the orchestration period of the egress port of the upstream node refers to the orchestration period of the first orchestration period length on the egress port of the upstream node, and the orchestration period of the ingress port of the downstream node refers to the orchestration period of the first orchestration period length on the ingress port of the downstream node.

Furthermore, the orchestration period phase difference corresponding to the first orchestration period length for the egress port and egress port between two adjacent nodes includes the egress port information for the upstream node, the third transmission time slot of the egress port of the upstream node, the egress port information for the downstream node, the fourth transmission time slot of the egress port of the downstream node, and the remaining time from the moment when the tail end of the third transmission time slot of the egress port of the upstream node is mapped to the fourth transmission time slot of the egress port of the downstream node to the end time of the fourth transmission time slot of the egress port of the downstream node. Here, the third transmission time slot of the egress port of the upstream node refers to a transmission time slot within the orchestration period of the first orchestration period length on the egress port of the upstream node, and the fourth transmission time slot of the egress port of the downstream node refers to a transmission time slot within the orchestration period of the first orchestration period length on the egress port of the downstream node.

In the embodiments of the present disclosure, after acquiring the time slot relative relationship corresponding to the first orchestration period length for the egress port and ingress port between each pair of adjacent nodes in the target routing path, the first orchestration period length and time slot length supported by each port, and the forwarding delay of each node, time slot resources can be reserved for each node in the target routing path based on the time slot relative relationship corresponding to the first orchestration period length for the egress port and ingress port between each pair of adjacent nodes, the first orchestration period length and time slot length supported by each port, and the forwarding delay of each node. That is to say, the embodiments of the present disclosure do not require obtaining the time slot relative relationship for each egress port pair between adjacent nodes. Instead, time slot resources can be reserved for each node based on the time slot relative relationship corresponding to the first orchestration period length for the egress port and ingress port between each pair of adjacent nodes. Therefore, the computational load for determining time slot relative relationships can be effectively reduced, the processing complexity of time slot resource reservation can be effectively lowered, thereby improving the processing efficiency of time slot resource reservation and reducing the waste of network resources.

The mapping relationship obtained through existing detection techniques primarily involves the mapping between the outgoing time slot of the egress port of the upstream node and the ongoing sending time slot of the egress port of the local node. When the number of egress ports on the local node is large, this results in numerous time slot mapping relationships, leading to significant advertisement overhead in the network. In the embodiments of the present disclosure, by adopting an optimized detection method, only the time slot relative relationship between the egress port of the upstream node and the ingress port of the local node is detected. Then, a derivation method is provided to obtain the time slot mapping relationship between the egress port of the upstream node and any egress port of the local node.

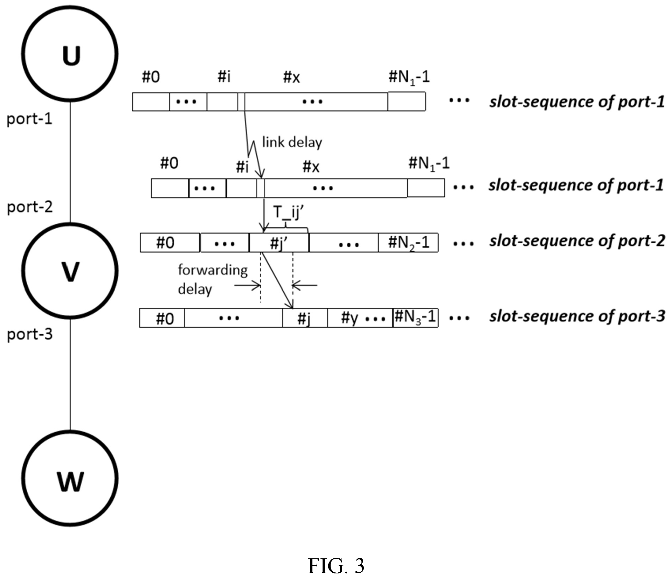

As shown in FIG. 3, through a single time slot detection message, the mapping relationship between time slot i of the egress port port-1 of the upstream Node U and time slot j' of the ingress port port-2 of the local Node V for adjacent nodes in the network can be obtained. That is, the tail end of time slot i of port-1 arrives at port-2 of Node V after the link delay and falls within time slot j' of port-2, with T_ij' time remaining until the end of time slot j. This time slot mapping relationship between Node U and Node V is recorded as <U.port-1 i : V.port-2 j', T_ij'>. This time slot mapping relationship is generally perceived and maintained by Node V when processing the detection message and is advertised by Node V in the network. Additionally, Node U may also obtain this time slot mapping relationship from Node V through a detection message (e.g., an ACK message) and then announce the relationship in the network.

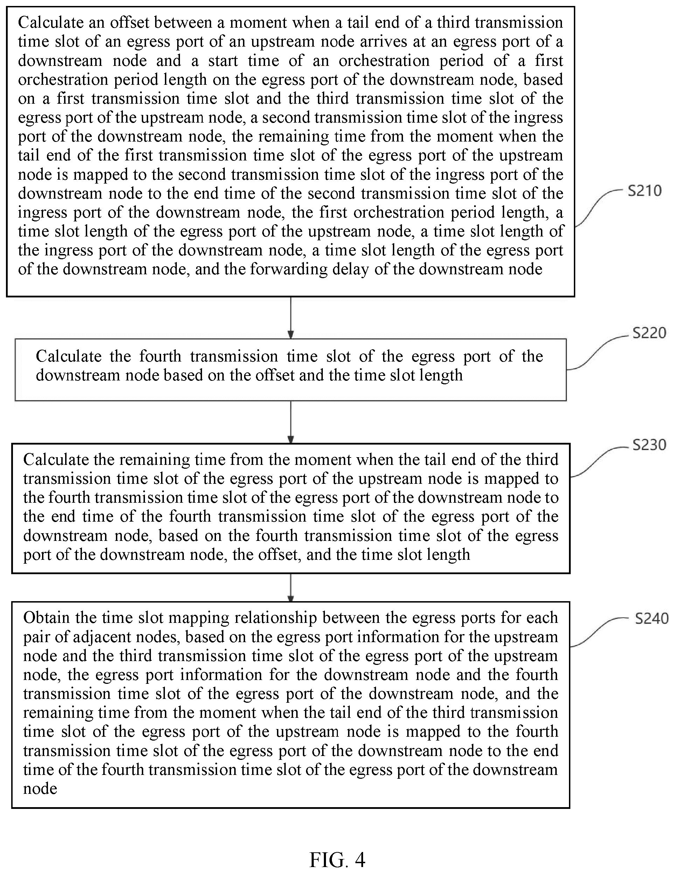

As shown in FIG. 4, based on the time slot detection process illustrated in FIG. 3, when the time slot relative relationship corresponding to the first orchestration period length for the egress port and ingress port is a time slot mapping relationship, Step S120 may include, but is not limited to, Step S210, Step S220, Step S230, and Step S240.

Step S210: calculating an offset between a moment when a tail end of a third transmission time slot of an egress port of an upstream node arrives at an egress port of a downstream node and a start time of an orchestration period of a first orchestration period length on the egress port of the downstream node, based on a first transmission time slot and the third transmission time slot of the egress port of the upstream node, a second transmission time slot of the ingress port of the downstream node, the remaining time from the moment when the tail end of the first transmission time slot of the egress port of the upstream node is mapped to the second transmission time slot of the ingress port of the downstream node to the end time of the second transmission time slot of the ingress port of the downstream node, the first orchestration period length, a time slot length of the egress port of the upstream node, a time slot length of the ingress port of the downstream node, a time slot length of the egress port of the downstream node, and the forwarding delay of the downstream node.

In this step, the mapping of the tail end of the first transmission time slot of the egress port of the upstream node to the second transmission time slot of the ingress port of the downstream node involves a link delay. Link delay refers to the time taken for a packet or segment to be transmitted from one end of a network node to the other. Link delay may include node processing delay, queuing delay, transmission delay, propagation delay, etc.

In an embodiment, the calculation process for the offset may include the following steps: firstly, multiplying the value obtained by adding 1 to the second transmission time slot by the time slot length of the ingress port of the downstream node to obtain a first data value; then, multiplying the difference between the third transmission time slot and the first transmission time slot by the time slot length of the egress port of the upstream node to obtain a second data value; next, performing a combined operation on the first data value, the second data value, the remaining time, the first orchestration period length, and the forwarding delay to obtain a third data value; finally, performing a modulo operation on the third data value with the first orchestration period length to obtain the offset.

Step S220: calculating the fourth transmission time slot of the egress port of the downstream node based on the offset and the time slot length.

In this step, the time slot length refers to the time slot length of the egress port of the downstream node.

In this embodiment, the fourth transmission time slot of the egress port of the downstream node can be obtained by performing a floor operation on the quotient of the offset divided by the time slot length of the egress port of the downstream node.

Step S230: calculating the remaining time from the moment when the tail end of the third transmission time slot of the egress port of the upstream node is mapped to the fourth transmission time slot of the egress port of the downstream node to the end time of the fourth transmission time slot of the egress port of the downstream node, based on the fourth transmission time slot of the egress port of the downstream node, the offset, and the time slot length.

In this embodiment, the calculation process for the remaining time may include the following steps: first, multiplying the value obtained by adding 1 to the fourth transmission time slot of the egress port of the downstream node by the time slot length of the egress port of the downstream node to obtain a fourth data value; then, subtracting the offset from the fourth data value to obtain the remaining time from the moment when the tail end of the third transmission time slot of the egress port of the upstream node is mapped to the fourth transmission time slot of the egress port of the downstream node to the end time of the fourth transmission time slot of the egress port of the downstream node.

Step S240: obtaining the time slot mapping relationship between the egress ports for each pair of adjacent nodes, based on the egress port information for the upstream node and the third transmission time slot of the egress port of the upstream node, the egress port information for the downstream node and the fourth transmission time slot of the egress port of the downstream node, and the remaining time from the moment when the tail end of the third transmission time slot of the egress port of the upstream node is mapped to the fourth transmission time slot of the egress port of the downstream node to the end time of the fourth transmission time slot of the egress port of the downstream node.

In this embodiment, adjacent nodes can exchange information based on orchestration periods of the same length. Furthermore, the forwarding delay within a node refers to the maximum duration a packet experiences from the ingress port to the egress port of the local node. It should be noted that the forwarding delay within a node does not include the queuing delay at the egress port of the local node or the propagation delay of the network link.

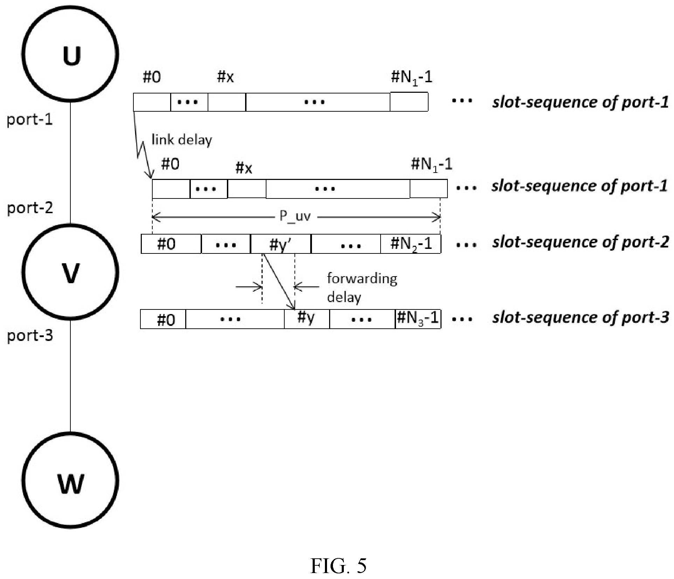

In yet another embodiment, as shown in FIG. 5, the phase difference between the orchestration period of the egress port port-1 of the upstream Node U and the orchestration period of the ingress port port2 of the local Node V for adjacent nodes in the network can be obtained through detection messages for the orchestration period phase difference. Specifically, when the tail end of the orchestration period of port-1 arrives at port-2 of Node V after the link delay, the tail end falls within the current orchestration period of port-2, and the time remaining until the end of the current orchestration period is P_uv. This phase difference is recorded as <U.port-1 : V.port-2, P_uv>. The phase difference is generally perceived and maintained by Node V when processing detection messages and advertised by Node V in the network. Additionally, the upstream Node U may also obtain the phase difference from Node V through detection messages (e.g., ACK messages) and then advertise the phase difference in the network.

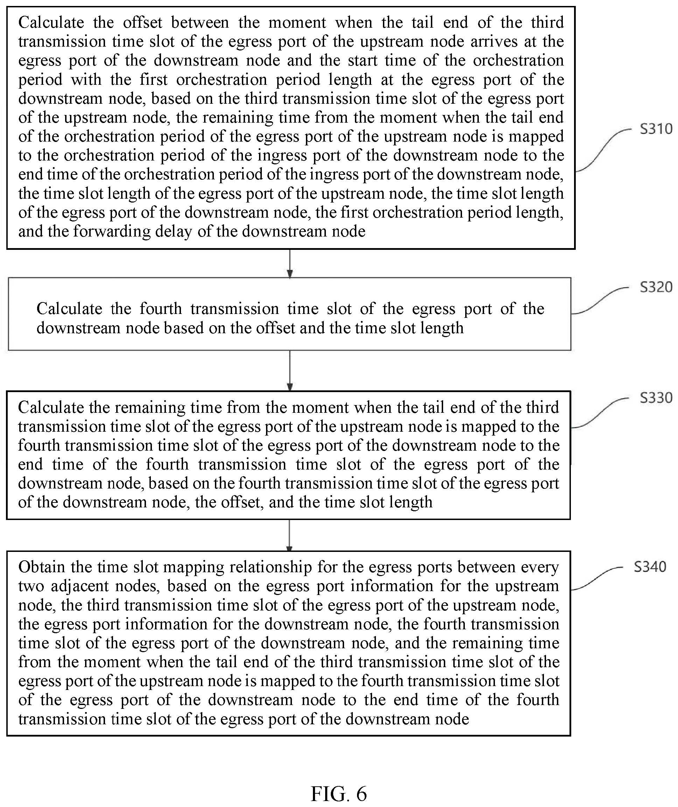

As shown in FIG. 6, based on the detection process for the orchestration period phase difference illustrated in FIG. 5, when the time slot relative relationship corresponding to the first orchestration period length for the egress port and the ingress port is the orchestration period phase difference, Step S120 may include, but is not limited to, Step S310, Step S320, Step S330, and Step S340.

Step S310: calculating the offset between the moment when the tail end of the third transmission time slot of the egress port of the upstream node arrives at the egress port of the downstream node and the start time of the orchestration period with the first orchestration period length at the egress port of the downstream node, based on the third transmission time slot of the egress port of the upstream node, the remaining time from the moment when the tail end of the orchestration period of the egress port of the upstream node is mapped to the orchestration period of the ingress port of the downstream node to the end time of the orchestration period of the ingress port of the downstream node, the time slot length of the egress port of the upstream node, the time slot length of the egress port of the downstream node, the first orchestration period length, and the forwarding delay of the downstream node.

In an embodiment, the calculation for the offset may include the following steps: first, multiplying the data obtained by adding 1 to the third transmission time slot of the egress port of the upstream node by the time slot length of the egress port of the upstream node to obtain a fifth data value; then, performing a combined operation on the fifth data value, the first orchestration period length, the remaining time, and the forwarding delay of the downstream node to obtain a sixth data value; finally, performing a modulo operation between the sixth data value and the first orchestration period length to obtain the offset.

Step S320: calculating the fourth transmission time slot of the egress port of the downstream node based on the offset and the time slot length.

In this step, the time slot length refers to the time slot length of the egress port of the downstream node.

In this embodiment, the fourth transmission time slot of the egress port of the downstream node is obtained by performing a floor operation on the offset divided by the time slot length of the egress port of the downstream node.

Step S330: calculating the remaining time from the moment when the tail end of the third transmission time slot of the egress port of the upstream node is mapped to the fourth transmission time slot of the egress port of the downstream node to the end time of the fourth transmission time slot of the egress port of the downstream node, based on the fourth transmission time slot of the egress port of the downstream node, the offset, and the time slot length.

In this embodiment, the calculation process for the remaining time may include the following steps: first, multiplying the value obtained by adding 1 to the fourth transmission time slot of the egress port of the downstream node by the time slot length of the egress port of the downstream node to obtain a sixth data value; then, subtracting the offset from the sixth data value to obtain the remaining time from the moment when the tail end of the third transmission time slot of the egress port of the upstream node is mapped to the fourth transmission time slot of the egress port of the downstream node to the end time of the fourth transmission time slot of the egress port of the downstream node.

Step S340: obtaining the time slot mapping relationship for the egress ports between every two adjacent nodes, based on the egress port information for the upstream node, the third transmission time slot of the egress port of the upstream node, the egress port information for the downstream node, the fourth transmission time slot of the egress port of the downstream node, and the remaining time from the moment when the tail end of the third transmission time slot of the egress port of the upstream node is mapped to the fourth transmission time slot of the egress port of the downstream node to the end time of the fourth transmission time slot of the egress port of the downstream node.

It should be noted that the time slot mapping relationship corresponding to the first orchestration period length for the egress ports between every two adjacent nodes can be calculated by a path computation engine. For example, the time slot mapping relationship can be calculated by a path computation engine deployed in the head node of the target routing path, or by a path computation engine deployed in the network controller, and serves as a reference for path computation and resource reservation.

In the above embodiment, the time slot relative relationship corresponding to the first orchestration period length for the egress ports between every two adjacent nodes is obtained by calculating the time slot relative relationship corresponding to the first orchestration period length for the egress port and the ingress port between every two adjacent nodes. This effectively reduces the data volume required for directly calculating the time slot mapping relationship corresponding to the first orchestration period length for the egress ports between every two adjacent nodes, thereby improving the efficiency of time slot resource reservation.

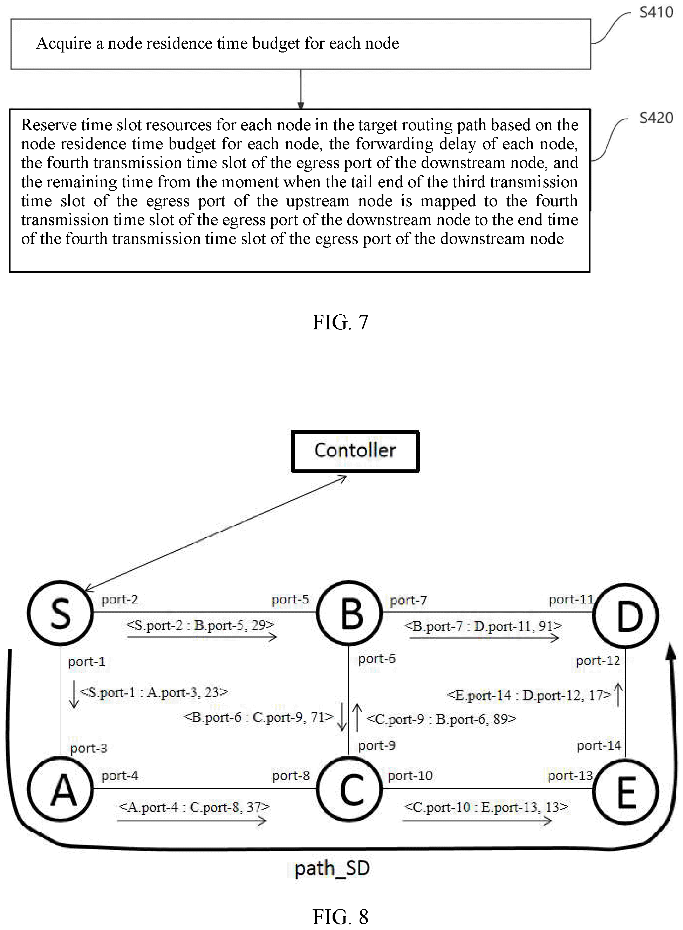

Referring to FIG. 7, a further explanation is provided for "reserving time slot resources for each port in the target routing path based on the time slot mapping relationship for the egress ports between every two adjacent nodes and the forwarding delay of each node" in Step S120. "Reserving time slot resources for each port in the target routing path based on the time slot mapping relationship for the egress ports between every two adjacent nodes and the forwarding delay of each node" in Step S120 may include, but is not limited to, Step S410 and Step S420.

Step S410: acquiring a node residence time budget for each node.

In this step, a budget for time delay is an expected end-to-end delay for a data packet transmitted along the target path, which is a requirement imposed by the service flow on the network.

In this embodiment, before obtaining the residence time budget for each node in the network, the network controller or the head node of the path must first preset the target routing path for packet transmission and the expected end-to-end delay. Then, after subtracting the sum of the propagation delays of all links included in the target path, the residence time budget for all nodes in the target path is obtained. This residence time budget is then evenly distributed to each node, finally the residence time budget for each individual node can be obtained.

Step S420: reserving time slot resources for each node in the target routing path based on the node residence time budget for each node, the forwarding delay of each node, the fourth transmission time slot of the egress port of the downstream node, and the remaining time from the moment when the tail end of the third transmission time slot of the egress port of the upstream node is mapped to the fourth transmission time slot of the egress port of the downstream node to the end time of the fourth transmission time slot of the egress port of the downstream node.

In this step, the upstream node and the downstream node refer to the adjacent nodes in the network. The calculation involving the residence time budget for each node, the forwarding delay of each node, the fourth transmission time slot of the egress port of the downstream node, and the remaining time from the moment when the tail end of the third transmission time slot of the egress port of the upstream node is mapped to the fourth transmission time slot of the egress port of the downstream node to the end time of the fourth transmission time slot of the egress port of the downstream node have been correspondingly explained in the aforementioned steps S210 to S240 and steps S310 to S340, and will not be reiterated here.

To more clearly illustrate the process of reserving time slot resources for each node in the target routing path, the following example is provided for explanation.

Referring to the network topology shown in FIG. 8, this embodiment describes the process in which the network controller reserves time slot resources in the network for a deterministic service flow. The network includes six nodes and a network controller, where a BGP-LS session is established between Node S and the network controller to advertise the link state data of the network to the network controller, with each link being a bidirectional link. Furthermore, port-1 to port-11 shown in FIG. 6 correspond to the egress ports and ingress ports of the network nodes. <S.port-1 : A.port-3, 23> represents the phase difference between the orchestration periods of the egress port port-1 of Node S and the egress port port-3 of Node A, meaning that when the tail end of the orchestration period of the egress port port-1 of Node S arrives at the egress port port-3 of Node A after the link delay, it is within the current orchestration period of port-3, and the remaining time to the end of the current orchestration period is 23 µs. The above example is for illustrative purposes; similar representations with the same structure in subsequent descriptions have analogous meanings. The labeling of egress ports and ingress ports for each node in FIG. 6 is complete and will not be reiterated here.

Assume that the propagation delay of all links is 10 µs, all ports of the nodes in the network adopt the same orchestration period length of 100 µs and the same time slot length of 10 µs, meaning the orchestration period contains 10 time slots, numbered 0 to 9. Additionally, assume that the fixed forwarding delay within each node is 5 µs.

Then, the orchestration period phase difference between adjacent nodes in the network is obtained through the detection protocol. Assume that the detected orchestration period phase difference in the direction from Node S to Node A is <S.port-1 : A.port-3, 23>; in the direction from Node B to Node C, the corresponding orchestration period phase difference is <B.port-6 : C.port-9, 71>; and in the direction from Node C to Node B, the corresponding orchestration period phase difference is <C.port-9 : B.port-6, 89>. Due to space limitations, the phase differences of the orchestration periods for all directions of each link are not indicated in the figure.

Subsequently, the phase differences of the orchestration periods between adjacent nodes in the network, the orchestration period length and time slot length supported by each port, as well as the forwarding delay of each node, are all flooded within the network via the IGP protocol. Node S will learn this information of the entire network and then report it to the network controller via BGP-LS.

Assume that the controller or the head Node S needs to calculate a candidate Path_SD passing through a path of S-A-C-E-D, with an expected end-to-end delay of 200 µs. After subtracting the sum of the propagation delays of all links included in the path, the total node residence time budget is obtained as 160 µs, resulting in an average Intra-node Residence Time Budget of 32 µs per node.

Assume that the network controller has reserved corresponding time slot resources in time slot 0 on port-1 of Node S.

Then, based on the phase difference <S.port-1 : A.port-3, 23> of the orchestration periods between Node S and Node A, it is calculated that time slot 0 of the egress port port-1 of Node S will be mapped to time slot 9 of the egress port of Node A, and the remaining time of time slot 9 is 8.

Finally, based on the Intra-node Residence Time Budget of 32 µs per node, the fixed forwarding delay of 5 µs within each node, and the remaining time of 8, it is calculated that only by reserving time slot 1 on the egress port of Node A can an estimated residence time for Node A close to the budget value be obtained.

It should be noted that the example provided in this embodiment is only intended to make Step S320 more comprehensible and does not represent a limitation on specific data or other information in the embodiment.

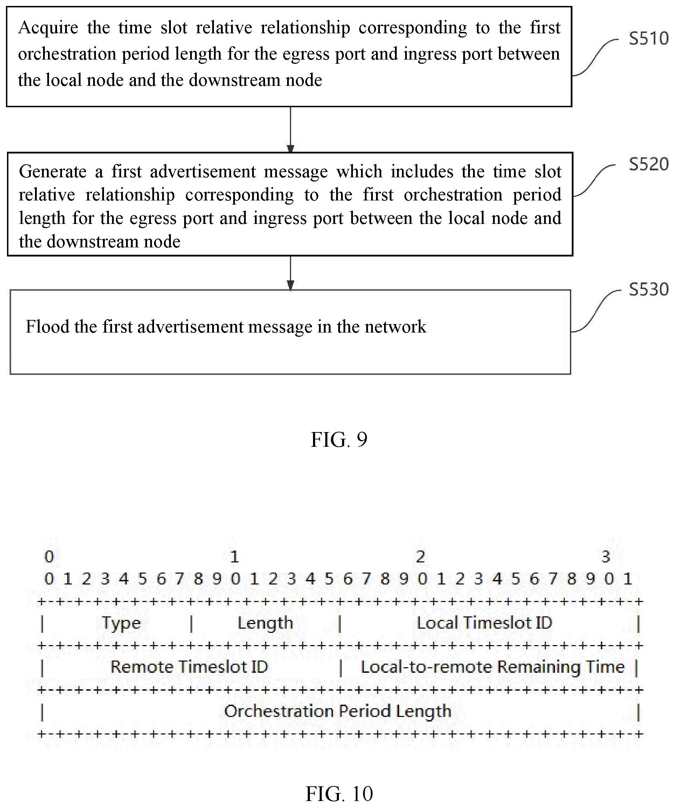

Referring to FIG. 9, in an embodiment of the present disclosure, before executing Step S120, the time slot resource reservation method may further include, but is not limited to, Step S510, Step S520, and Step S530.

Step S510: acquiring the time slot relative relationship corresponding to the first orchestration period length for the egress port and ingress port between the local node and the downstream node.

In this step, the time slot relative relationship for the egress port and ingress port between the local node and the downstream node may be the time slot relative relationship for the egress port and ingress port between any two adjacent nodes based on the IGP protocol. Here, the IGP protocol may be the Intermediate System to Intermediate System (ISIS) protocol, or may be the Open Shortest Path First (OSPF) protocol, or may be the Open Shortest Path First Version 3 (OSPFv3) protocol supporting IPv6, etc., without specific limitation herein.

Step S520: generating a first advertisement message which includes the time slot relative relationship corresponding to the first orchestration period length for the egress port and ingress port between the local node and the downstream node.

In this step, the time slot relative relationship may be the time slot mapping relationship corresponding to the first orchestration period length for the egress port and ingress port between the local node and the downstream node, or may be the orchestration period phase difference corresponding to the first orchestration period length for the egress port and ingress port between the local node and the downstream node. The first advertisement information may be generated by the local node or by the downstream node; that is, both the upstream node and the downstream node between adjacent nodes can generate the first advertisement information. Since the time slot relative relationship is generally perceived and maintained by the downstream node when processing detection messages, if the advertisement information is generated by the local node, it is necessary to first obtain the time slot relative relationship transmitted by the downstream node.

In an embodiment, by extending the ISIS protocol set of the IGP protocol, a corresponding Sub-TLV can be added to the existing ISIS protocol set (referencing RFC5305, RFC5311, RFC5316, RFC5120) which has already defined TLVs 22/23/25/141/222/223 for advertising adjacency relationships. This Sub-TLV encapsulates the time slot relative relationship for the egress port and ingress port between the local node and the downstream node, thereby generating the first advertisement message.

In an embodiment, when generating the first advertisement message which includes the time slot mapping relationship for the egress port and ingress port between the local node and the downstream node, in order to more clearly illustrate the generation process of the first advertisement information, the following steps S521 to S522 provide an example for explanation.

Step S521: generating a first time slot mapping Sub-TLV which includes the time slot mapping relationship corresponding to the first orchestration period length for the egress port and ingress port between the local node and the downstream node.

In an example, when the first time slot mapping Sub-TLV is generated by the local node, a new type of Sub-TLV can be added to TLVs 22/23/25/141/222/223 and named Timeslot Mapping Sub-TLV. This Sub-TLV is used to carry the time slot mapping relationship between adjacent nodes for the egress port and ingress port. Referring to FIG. 10, which exemplarily shows the structure of the newly added Timeslot Mapping Sub-TLV, the explanations of the main fields in this sub-TLV structure are as follows.

Type: occupies 1 byte, used to indicate that this sub-TLV is a Timeslot Mapping Sub-TLV.

Length: occupies 1 byte, used to indicate the length of this sub-TLV excluding the Type field and the Length field.

Local Timeslot ID: occupies 2 bytes, used to represent a specific time slot within the orchestration period of the local node's egress port.

Remote Timeslot ID: occupies 2 bytes, used to represent a specific time slot within the orchestration period of the neighbor node's ingress port.

Local-to-remote Remaining Time: occupies 2 bytes, represents the remaining time until the end of the time slot of the neighbor node to which the local node's time slot is mapped, with the unit being µs.

Orchestration Period Length (OPL): occupies 4 bytes, used to represent the length of the orchestration period, with the unit being µs.

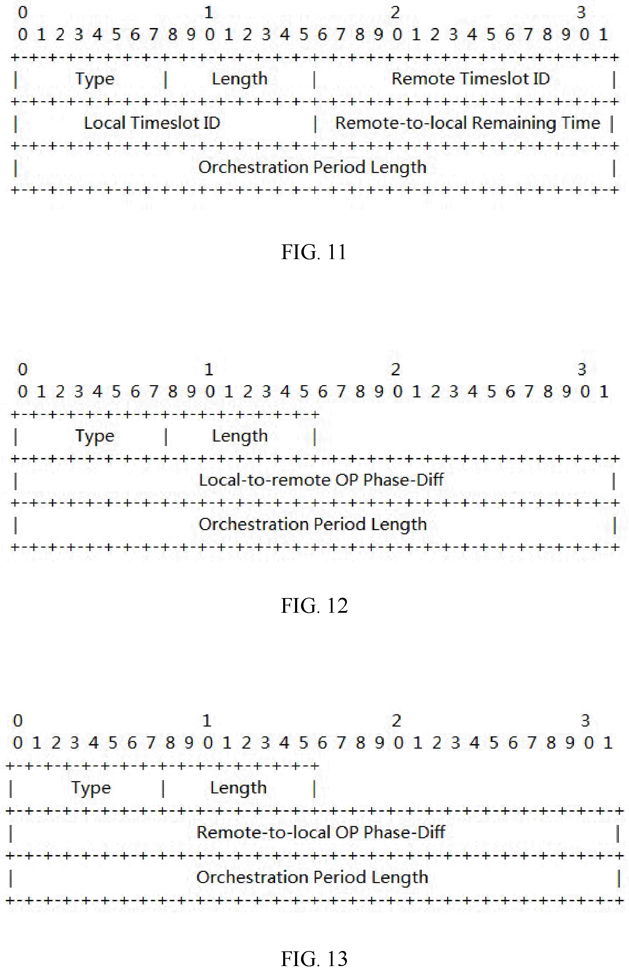

In another example, when the first time slot mapping Sub-TLV is generated by the downstream node, a new Sub-TLV named Reverse Timeslot Mapping Sub-TLV can be added to TLV 22/23/25/141/222/223. The Reverse Timeslot Mapping Sub-TLV is used to carry the time slot mapping relationship between adjacent nodes for the egress port and ingress port. Referring to FIG. 11, which exemplarily illustrates the structure of the newly added Reverse Timeslot Mapping Sub-TLV, the interpretation of each main field in this sub-TLV structure is as follows.

Type: occupies 1 byte, used to indicate that this sub-TLV is a Reverse Timeslot Mapping Sub-TLV.

Length: occupies 1 byte, used to indicate the length of this sub-TLV excluding the Type field and the Length field.

Remote Timeslot ID: occupies 2 bytes, used to represent a specific time slot within the orchestration period of the neighbor node's egress port.

Local Timeslot ID: occupies 2 bytes, used to represent a specific time slot within the orchestration period of the local node's ingress port.

Remote-to-local Remaining Time: occupies 2 bytes, represents the remaining time until the end of the time slot of the neighbor node to which the local node's time slot is mapped, with the unit being µs.

Orchestration Period Length (OPL): occupies 4 bytes, used to represent the length of the orchestration period, with the unit being µs.

Step S522: generating a first advertisement message based on the first time slot mapping Sub-TLV.

In this step, based on the encapsulation format of the first time slot mapping Sub-TLV, after assigning the corresponding field placeholder bytes, the content is re-encapsulated to generate the first advertisement message.

In another embodiment, when generating a first advertisement message including the orchestration period phase difference for the egress port and ingress port between the local node and the downstream node, similarly, the first advertisement information can be generated by either the local node or the downstream node. The following steps S523 to S524 provide an illustrative example.

Step S523: generating a first orchestration period phase difference Sub-TLV which includes the orchestration period phase difference corresponding to the first orchestration period length for the egress port and ingress port between the local node and the downstream node.

In an example, when the first orchestration period phase difference Sub-TLV is generated by the local node, a new Sub-TLV can be added in TLVs 22/23/25/141/222/223 and named Orchestration Period Phase Difference Sub-TLV, which is used to carry the orchestration period phase difference between adjacent nodes for the egress port and ingress port. Referring to FIG. 12, which exemplarily shows the structure of the newly added Orchestration Period Phase Difference Sub-TLV, the explanations of the main fields in this sub-TLV structure are as follows.

Type: occupies 1 byte, used to indicate that this TLV is an Orchestration Period Phase Difference Sub-TLV.

Length: occupies 1 byte, used to indicate the length of this sub-TLV excluding the Type field and Length field.

Local-to-remote OP Phase-Diff: occupies 4 bytes, used to represent the phase difference between the orchestration period of the egress port of the local node and the orchestration period of the ingress port of the neighbor node, with the unit being µs.

Orchestration Period Length (OPL): occupies 4 bytes, used to represent the length of the orchestration period, with the unit being µs.

In another example, when the first orchestration period phase difference Sub-TLV is generated by the downstream node, a new Sub-TLV can be added in TLVs 22/23/25/141/222/223 and named Reverse Orchestration Period Phase Difference Sub-TLV, which is used to carry the orchestration period phase difference between adjacent nodes for the egress port and ingress port. Referring to FIG. 13, which exemplarily shows the structure of the newly added Reverse Orchestration Period Phase Difference Sub-TLV, the explanations of the main fields in this sub-TLV structure are as follows.

Type: occupies 1 byte, used to indicate that this TLV is a Reverse Orchestration Period Phase Difference Sub-TLV.

Length: occupies 1 byte, used to indicate the length of this sub-TLV excluding the Type field and Length field.

Remote-local OP Phase-Diff: occupies 4 bytes, used to represent the phase difference between the orchestration period of the egress port of the neighbor node and the orchestration period of the ingress port of the local node, with the unit being µs.

Orchestration Period Length (OPL): occupies 4 bytes, used to represent the length of the orchestration period, with the unit being µs.

Step S524: generating a first advertisement message based on the first orchestration period phase difference Sub-TLV.

In this step, based on the encapsulation format of the first orchestration period phase difference Sub-TLV, after assigning corresponding field placeholder bytes, the content is re-encapsulated to generate the first advertisement message.

It should be noted that, when advertising a certain attribute between the local node and a neighbor node in the IGP protocol, it generally refers to a unidirectional attribute from the local node to the neighbor node. However, the time slot mapping relationship or the orchestration period phase difference mentioned in the present disclosure refer to a unidirectional attribute from the local node to the downstream node. Therefore, when the first advertisement information is generated by the local node, it is first necessary for the downstream node to inform the local node of the detection result of the time slot relative relationship through a message of the detection protocol (e.g., an ACK message).

Furthermore, when multiple parallel links exist between the local node and the downstream node, each link may have a different time slot mapping relationship. According to the existing technology, additional Sub-TLVs (such as port addresses defined in RFC5305 and RFC6119, or port identifiers defined in RFC5307) are required within TLVs 22/23/25/141/222/223 to distinguish the links.

Additionally, the naming of the newly added Sub-TLVs is not limited in this embodiment. Although the embodiment of the present disclosure describes the extension of the IS-IS protocol, it does not imply that this is the only method. Similarly, the OSPFv2 or OSPFv3 protocol can be extended to advertise the time slot mapping relationship or the orchestration period phase difference, which will not be elaborated further here.

Step S530: flooding the first advertisement message in the network.

In this step, flooding refers to the behavior of each node in the network advertising link state data to all neighbor nodes through the IGP protocol.

In this embodiment, there can be multiple nodes in the network. When the number of nodes in the network is multiple, each adjacent node is interconnected to form multiple links, where each link is a bidirectional link. The time slot relative relationship between adjacent nodes in the link, the orchestration period length and time slot length supported by each port, as well as the forwarding delay of each node, are all flooded in the network via the IGP protocol.

In an embodiment, when a node in the network receives a first advertisement message which is not addressed to it, it forwards the first advertisement message to all links connected to that node, except the node from which the message was just received. Through the analysis and forwarding by all nodes in the network, the first advertisement message is flooded throughout the network. It can be understood that when the network communication traffic is low, the transmission delay of the first advertisement message can be minimized.

After a router establishes a full adjacency state with at least one neighbor router, it builds a flooding list for each neighbor in the full adjacency state. Then, after sending an LSA-it should be noted that an LSA does not describe only one link but can describe multiple links, and different types of LSAs describe different content-a retransmission list is established for each neighbor, and the LSA just sent is placed into the retransmission list. If no acknowledgment is received from that neighbor node within 5 seconds (RxmtInterval), the LSA is retransmitted. Regardless of the network type, retransmitted link state update data packets are always sent in unicast form.

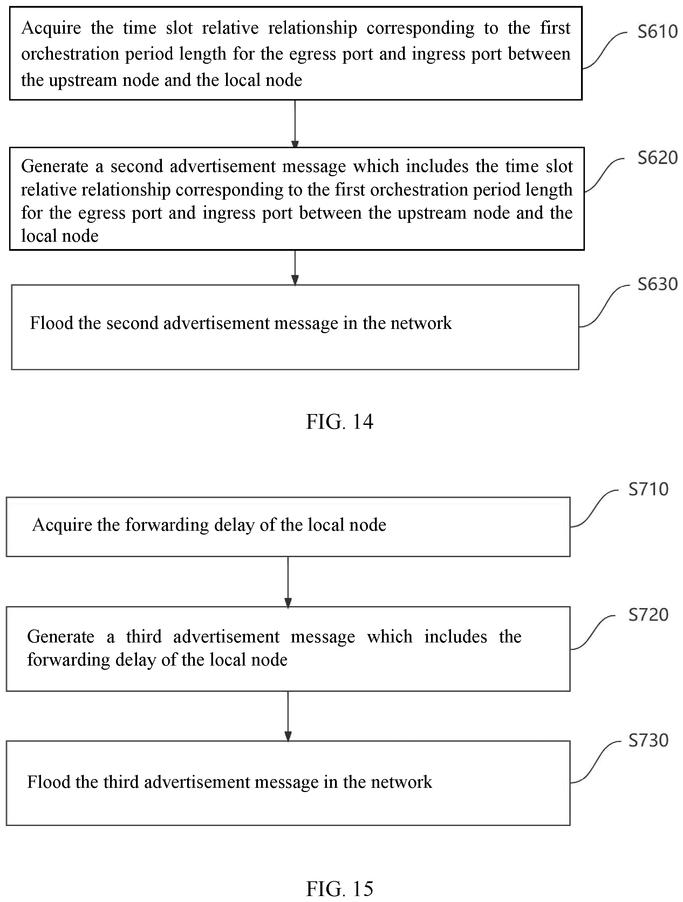

Referring to FIG. 14, in an embodiment of the present disclosure, before performing Step S110, Step S110 may include, but is not limited to, Step S610, Step S620, and Step S630.

Step S610: acquiring the time slot relative relationship corresponding to the first orchestration period length for the egress port and ingress port between the upstream node and the local node.

In this step, the time slot relative relationship may be the time slot mapping relationship corresponding to the first orchestration period length for the egress port and ingress port between the upstream node and the local node, or it may be the orchestration period phase difference corresponding to the first orchestration period length for the egress port and ingress port between the upstream node and the local node.

Step S620: generating a second advertisement message which includes the time slot relative relationship corresponding to the first orchestration period length for the egress port and ingress port between the upstream node and the local node.

In this step, the process of generating the second advertisement message is as follows: generating a first time slot mapping Sub-TLV which includes the time slot mapping relationship corresponding to the first orchestration period length for the egress port and ingress port between the upstream node and the local node, and generating the second advertisement message based on the first time slot mapping Sub-TLV; or generating a first orchestration period phase difference Sub-TLV which includes the orchestration period phase difference corresponding to the first orchestration period length for the egress port and ingress port between the upstream node and the local node, and generating the second advertisement message based on the first orchestration period phase difference Sub-TLV.

Step S630: flooding the second advertisement message in the network.

In this embodiment, similar to the content of the aforementioned Step S530, details are not repeated here.

Referring to FIG. 15, in an embodiment of the present disclosure, before performing Step S110, Step S110 may include, but is not limited to, Step S710, Step S720, and Step S730.

Step S710: acquiring the forwarding delay of the local node.

In this step, the forwarding delay usually refers to the time taken for a data packet to travel from the source node to an intermediate node and then be forwarded from the intermediate node to the target node in the network. Usually, the forwarding delay includes two parts: the buffering delay at the intermediate node and the transmission delay. However, the forwarding delay of the local node in this step refers only to the forwarding delay within the local node, i.e., the maximum delay experienced by a packet from the ingress port to the egress port of the local node, and does not include the queuing delay on the egress port of the local node or the link propagation delay.

In an embodiment, after Node A receives a data packet, Node A first performs detection on the data packet, such as decapsulating and analyzing the header, looking up the routing table, routing policies, etc., to determine the subsequent link to which the data packet should be directed. During this process, the processing time spent by Node A is related to factors such as the data packet length and bandwidth. Generally, the forwarding delay of Node A is typically on the order of microseconds or lower.

Step S720: generating a third advertisement message which includes the forwarding delay of the local node.

In this step, the third advertisement information is generated based on the forwarding delay of the local node. This can be achieved by extending the network protocol suite, re-encapsulating the forwarding delay of each node using the newly added network protocol, and then advertising the forwarding delay of each node to the network.

In an embodiment, since the existing ISIS protocol suite (refer to RFC7981) already defines TLV 242 for advertising node capabilities, the IS-IS protocol is extended to support the forwarding delay of the local node. The specific steps are as follows.

Step S721: generating a forwarding delay Sub-TLV which includes the forwarding delay of the local node.

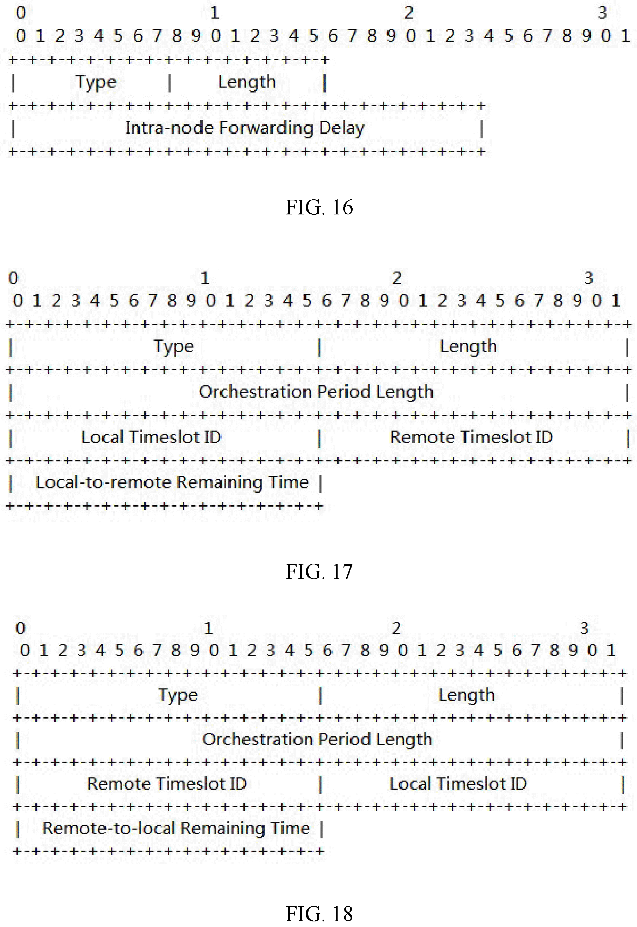

In this step, a new forwarding delay Sub-TLV is added to TLV 242, named as Intra-node Forwarding Delay Sub-TLV, which is used to carry the forwarding delay within the local node, with the unit being µs. Referring to FIG. 16, which exemplarily illustrates the structure of the newly added Intra-node Forwarding Delay Sub-TLV, the explanations of the main fields in this sub-TLV structure are as follows.

Type: occupies 1 byte, used to indicate that this sub-TLV is an Intra-node Forwarding Delay Sub-TLV;

Length: occupies 1 byte, used to indicate the length of this sub-TLV excluding the Type field and the Length field.

Intra-node Forwarding Delay: occupies 3 bytes, used to represent the forwarding delay (F) within the local node, with the unit being µs.

Step S722: generating a third advertisement message based on the forwarding delay Sub-TLV.

In this step, according to the encapsulation format of the Intra-node Forwarding Delay Sub-TLV, a field named Intra-node Forwarding Delay is designated to represent the forwarding delay within the local node, with the unit being µs.

Furthermore, this embodiment does not impose restrictions on the extended network protocols. Similarly, protocols such as OSPFv2 or OSPFv3 can be extended to advertise the forwarding delay within the local node to the network.

Step S730: flooding the third advertisement message in the network.

In this step, the content is similar to that of the aforementioned Step S530, and thus will not be elaborated here.

This embodiment aims to enable the network controller or the path head node to successfully calculate the time slot resource reservation for each node by generating a third advertisement message which includes the forwarding delay of the local node and flooding this information in the network. This calculation is based on factors such as the forwarding delay, the time slot mapping from any time slot of the egress port of an upstream node to the egress port of a downstream node between adjacent nodes along the path, the orchestration period length supported by each port of each node, and the time slot length within the orchestration period.

Furthermore, the time slot resource reservation method provided by the embodiments of the present disclosure can be applied to a network controller. The network controller can be connected to any node in the network and receive a fourth advertisement message sent by a target node.

The fourth advertisement message includes at least: a time slot mapping TLV for the time slot mapping relationship between the egress port and the ingress port of two adjacent nodes, an orchestration period phase difference TLV for the orchestration period phase difference between the egress port and the ingress port of two adjacent nodes, a scheduling capability TLV for the first orchestration period length and the time slot length, and a forwarding delay TLV for the forwarding delay.

It can be understood that when the calculation of the deterministic forwarding path based on time slot resource reservation is performed by the network controller, the network controller needs to collect the fourth advertisement messages from the network.

In an embodiment, a target node among the multiple nodes of the routing path is connected to the network controller, and a BGP-LS session is established between the target node and the network controller. The fourth advertisement message is uploaded by the target node to the network controller via the BGP-LS protocol (see RFC7752), thereby enabling the network controller to obtain the fourth advertisement message. Here, BGP-LS primarily defines an NLRI type (i.e., link-state NLRI, which is further subdivided into node NLRI, link NLRI, and prefix NLRI) and a BGP path attribute (i.e., BGP-LS attribute, which further includes various node attributes, link attributes, and prefix attributes, advertised along with node NLRI, link NLRI, and prefix NLRI, respectively).

In an embodiment, a Node A is designated within an IGP domain to establish a BGP-LS session with the network controller. This Node A advertises the link state data learned from the IGP domain to the network controller.

To more clearly illustrate the process in which the network controller connects to the target Node A in the network and receives the fourth advertisement message sent by the target Node A, which involves the extension of the BGP-LS protocol, the following provides an example for explanation.

It should be noted that the target Node A can be an upstream node or a downstream node between two adjacent nodes in a path. By extending the BGP-LS protocol, the time slot mapping relationship or orchestration period phase difference between the ports of nodes in the IGP domain can be collected.

In an example, when the target Node A is an upstream node and the time slot mapping relationship between the ports of nodes in the IGP domain is collected, a new link attribute can be added to the BGP-LS attribute, namely the Timeslot Mapping TLV, to represent the time slot mapping relationship. Referring to FIG. 17, which exemplarily illustrates the structure of the newly added Timeslot Mapping TLV, the explanations of the main fields in this TLV structure are as follows.

Type: occupies 2 bytes, used to indicate that this TLV is a Timeslot Mapping TLV.

Length: occupies 2 bytes, used to indicate the length of this TLV excluding the Type and Length fields.

Local Timeslot ID: occupies 2 bytes, used to represent a specific time slot within the orchestration period of the local node's egress port.

Remote Timeslot ID: occupies 2 bytes, used to represent a specific time slot within the orchestration period of the neighbor node's ingress port.

Local-to-remote Remaining Time: occupies 2 bytes, represents the remaining time until the end of the time slot of the neighbor node to which the local node's time slot is mapped, with the unit being µs.

Orchestration Period Length (OPL): occupies 4 bytes, used to represent the length of the orchestration period, with the unit being µs.

In another example, when the target Node A is a downstream node and the time slot mapping relationship between the ports of nodes in the IGP domain is collected, a new link attribute can be added to the BGP-LS attribute, namely the Reverse Timeslot Mapping TLV, to represent the time slot mapping relationship. Referring to FIG. 18, which exemplarily illustrates the structure of the newly added Reverse Timeslot Mapping TLV, the explanations of the main fields in this TLV structure are as follows.

Type: occupies 2 bytes, used to indicate that this TLV is a Timeslot Mapping TLV.

Length: occupies 2 bytes, used to indicate the length of this TLV excluding the Type and Length fields.

Remote Timeslot ID: occupies 2 bytes, used to represent a specific time slot within the orchestration period of the neighbor node's egress port.

Local Timeslot ID: occupies 2 bytes, used to represent a specific time slot within the orchestration period of the local node's ingress port.

Remote-to-local Remaining Time: occupies 2 bytes, represents the remaining time until the end of the time slot of the neighbor node to which the local node's time slot is mapped, with the unit being µs.

Orchestration Period Length (OPL): occupies 4 bytes, used to represent the length of the orchestration period, with the unit being µs.

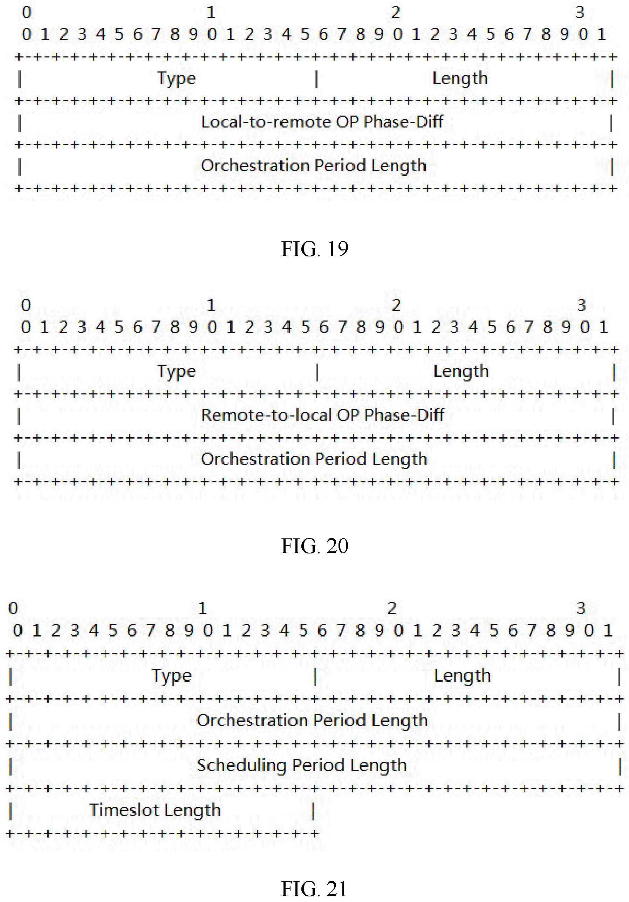

In yet another example, when the target Node A is an upstream node and the orchestration period phase difference between the ports of nodes in the IGP domain is collected, a new link attribute can be added to the BGP-LS attribute, namely the Orchestration Period Difference TLV, to represent the orchestration period phase difference. Referring to FIG. 19, which exemplarily illustrates the structure of the newly added Orchestration Period Difference TLV, the explanations of the main fields in this TLV structure are as follows.

Type: occupies 2 bytes, used to indicate that this TLV is an Orchestration Period Difference TLV. Length: occupies 2 bytes, used to indicate the length of this TLV excluding the Type and Length fields.

Local-to-remote OP Phase-Diff: occupies 4 bytes, used to represent the phase difference between the orchestration period of the egress port of the local node and the orchestration period of the ingress port of the neighbor node, with the unit being µs.

Orchestration Period Length (OPL): occupies 4 bytes, used to represent the length of the orchestration period, with the unit being µs.

In yet another example, when the target Node A is a downstream node and the orchestration period phase difference between the ports of nodes in the IGP domain is collected, a new link attribute can be added to the BGP-LS attribute, namely the Reverse Orchestration Period Difference TLV, to represent the orchestration period phase difference. Referring to FIG. 20, which exemplarily illustrates the structure of the newly added Reverse Orchestration Period Difference TLV, the explanations of the main fields in this TLV structure are as follows.

Type: occupies 2 bytes, used to indicate that this TLV is an Orchestration Period Difference TLV. Length: occupies 2 bytes, used to indicate the length of this TLV excluding the Type and Length fields.

Remote-local OP Phase-Diff: occupies 4 bytes, used to represent the phase difference between the orchestration period of the egress port of the neighbor node and the orchestration period of the ingress port of the local node, with the unit being µs.

Orchestration Period Length (OPL): occupies 4 bytes, used to represent the length of the orchestration period, with the unit being µs.

In this step, it can be understood that since BGP-LS needs to import the link state data of the entire IGP domain, the newly added link attribute and the field placeholder byte occupancy within the encapsulation structure will be slightly larger, not entirely identical to the placeholder byte occupancy described in the aforementioned extension of the IGP protocol.

Furthermore, it is necessary to extend the BGP-LS protocol to collect the orchestration period length and time slot length supported by each port of the nodes in the IGP domain. By adding a new link attribute to the BGP-LS attribute, namely the TQF Scheduling Capability TLV, to represent the orchestration period length and time slot length supported by the port, refer to FIG. 21, which exemplarily illustrates the structure of the newly added TQF Scheduling Capability TLV. In this TLV structure, the explanations of the main fields are as follows.

Type: occupies 2 bytes, used to indicate that this TLV is a TQF Scheduling Capability TLV.

Length: occupies 2 bytes, used to indicate the length of this TLV excluding the Type and Length fields.

Orchestration Period Length: used to represent the orchestration period length supported by the port, with the unit being µs.

Scheduling Period Length: used to represent the actual scheduling period length created on the port's forwarding hardware for this orchestration period length, with the unit being µs.

Timeslot Length: used to represent the length of each time slot contained in this orchestration period, with the unit being µs.

It should be noted that a port can support multiple orchestration period lengths, and separate TQF Scheduling Capability TLVs should be advertised for each orchestration period length. Additionally, the scheduling period is generally less than or equal to the orchestration period, which is related to the hardware's capability.

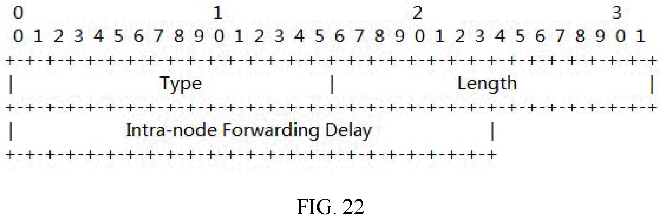

Additionally, it is necessary to extend the BGP-LS protocol to collect the maximum forwarding delay of each node in the IGP domain. A new node attribute in the BGP-LS attribute, namely the Intra-node Forwarding Delay TLV, is added to represent the maximum forwarding delay within the node, with the unit being µs. Referring to FIG. 22, which exemplarily illustrates the structure of the newly added Intra-node Forwarding Delay TLV, the explanations of the main fields in this TLV structure are as follows.

Type: occupies 2 bytes, used to indicate that this TLV is a TQF Scheduling Capability TLV.

Length: occupies 2 bytes, used to indicate the length of this TLV excluding the Type and Length fields.

Intra-node Forwarding Delay: occupies 3 bytes, used to represent the forwarding delay within the local node, with the unit being µs.

In this embodiment, by extending the BGP-LS protocol, the target Node A reports the link state data learned from the IGP domain to the network controller. The link state data includes at least the aforementioned fourth advertisement message. This enables the network controller to calculate a path which meets the service delay requirement based on the received time slot mapping relationship or orchestration period phase difference between adjacent nodes in the network, the orchestration period length and time slot length supported by the nodes, the forwarding delay information of the nodes, and, of course, the link propagation delay, and to reserve time slot resources along the path.

It should be noted that, in actual applications, the extension of the BGP-LS protocol described above is not limited to importing link state data from the IGP domain and reporting it to the controller. It can also import data from nodes or links not belonging to the IGP domain. For example, inter-domain links connecting two Autonomous Systems (ASes) also possess the time slot mapping and orchestration period phase difference information described in the present disclosure and can be imported into BGP-LS for reporting to the controller.

An embodiment of the present disclosure also provides a communication device, including a memory, a processor, and a computer program stored in the memory and executable on the processor. The computer program is stored in a computer-readable storage medium. The processor of the device reads the computer program or computer instructions from the computer-readable storage medium, and the processor executes the computer program or computer instructions, causing the device to execute the time slot resource reservation method described in the above embodiments. For example, the device executes the method steps S110 to S120 in FIG. 2, steps S210 to S240 in FIG. 4, steps S310 to S340 in FIG. 6, steps S410 to S420 in FIG. 7, etc., as described above.

An embodiment of the present disclosure also provides a computer-readable storage medium. The computer-readable storage medium stores computer-executable instructions. When the computer-executable instructions are executed by a processor or controller, for example, by a processor in the aforementioned embodiment of the communication device, the aforementioned processor can be caused to execute the time slot resource reservation method described in the above embodiments. For example, the processor can execute the method steps S110 to S120 in FIG. 2, steps S210 to S240 in FIG. 4, steps S310 to S340 in FIG. 6, steps S410 to S420 in FIG. 7, etc., as described above.

Those of ordinary skill in the art can understand that all or some of the steps, systems disclosed in the above methods can be implemented as software, firmware, hardware, and appropriate combinations thereof. Certain physical components or all physical components can be implemented as software executed by a processor, such as a central processing unit, digital signal processor, or microprocessor, or as hardware, or as an integrated circuit, such as an application-specific integrated circuit. Such software may be distributed on computer-readable media, which may include computer storage medium(or non-transitory medium) and communication medium(or transitory medium). As is well known to those of ordinary skill in the art, the term computer storage medium encompasses both volatile and nonvolatile, removable and non-removable medium implemented in any method or technology for storage of information such as computer-readable instructions, data structures, program modules, or other data. Computer storage medium include, but are not limited to, RAM, ROM, EEPROM, flash memory or other memory technology, CD-ROM, digital versatile disc (DVD) or other optical disk storage, magnetic cassettes, magnetic tape, magnetic disk storage or other magnetic storage devices, or any other medium which can be used to store the desired information and which can be accessed by a computer. As is well known to those of ordinary skill in the art, communication media typically embody computer-readable instructions, data structures, program modules, or other data in a modulated data signal such as a carrier wave or other transport mechanism, and include any information delivery media.

## Claims

1. A time slot resource reservation method, comprising:
acquiring, in a target routing path, a time slot relative relationship corresponding to a first orchestration period length for an egress port and an ingress port between each pair of adjacent nodes, a first orchestration period length and time slot length supported by each port, and a forwarding delay of each node; and
reserving time slot resources for each node in the target routing path, according to the time slot relative relationship corresponding to the first orchestration period length for an egress port and an ingress port between each pair of adjacent nodes, the first orchestration period length and the time slot length supported by each port, and the forwarding delay of each node.

2. The method according to claim 1, wherein the time slot relative relationship comprises a time slot mapping relationship or an orchestration period phase difference; and
reserving time slot resources for each node in the target routing path, according to the time slot relative relationship corresponding to the first orchestration period length for the egress port and the ingress port between each pair of adjacent nodes, the first orchestration period length and the time slot length supported by each port, and the forwarding delay of each node comprises one of the following:
calculating a time slot mapping relationship corresponding to the first orchestration period length for the egress ports between each pair of adjacent nodes, according to the time slot mapping relationship corresponding to the first orchestration period length for the egress port and the ingress port between each pair of adjacent nodes, the first orchestration period length and the time slot length supported by each port, and the forwarding delay of each node; and reserving time slot resources for each node in the target routing path according to the time slot mapping relationship corresponding to the first orchestration period length for the egress ports between each pair of adjacent nodes and the forwarding delay of each node; or
calculating a time slot mapping relationship corresponding to the first orchestration period length for the egress ports between each pair of adjacent nodes, according to the orchestration period phase difference corresponding to the first orchestration period length for the egress port and the ingress port between each pair of adjacent nodes, the first orchestration period length and the time slot length supported by each port, and the forwarding delay of each node; and reserving time slot resources for each node in the target routing path according to the time slot mapping relationship corresponding to the first orchestration period length for the egress ports between each pair of adjacent nodes and the forwarding delay of each node.

3. The method according to claim 2, wherein, in response to the time slot relative relationship comprising a time slot mapping relationship:
the time slot mapping relationship corresponding to the first orchestration period length for the egress port and the ingress port comprises egress port information for an upstream node, a first transmission time slot of the egress port of the upstream node, ingress port information for a downstream node, a second transmission time slot of the ingress port of the downstream node, and a remaining time from a moment when a tail end of the first transmission time slot of the egress port of the upstream node is mapped to the second transmission time slot of the ingress port of the downstream node to an end time of the second transmission time slot of the ingress port of the downstream node; the first transmission time slot of the egress port of the upstream node is a transmission time slot in an orchestration period having the first orchestration period length of the egress port of the upstream node; the second transmission time slot of the ingress port of the downstream node is a transmission time slot in an orchestration period having the first orchestration period length of the ingress port of the downstream node; and
the time slot mapping relationship corresponding to the first orchestration period length for the egress ports comprises the egress port information for the upstream node, a third transmission time slot of the egress port of the upstream node, the egress port information for the downstream node, a fourth transmission time slot of the egress port of the downstream node, and a remaining time from a moment when a tail end of the third transmission time slot of the egress port of the upstream node is mapped to the fourth transmission time slot of the egress port of the downstream node to an end time of the fourth transmission time slot of the egress port of the downstream node; the third transmission time slot of the egress port of the upstream node is a transmission time slot in an orchestration period having the first orchestration period length of the egress port of the upstream node; the fourth transmission time slot of the egress port of the downstream node is a transmission time slot in an orchestration period having the first orchestration period length of the egress port of the downstream node.

4. The method according to claim 3, wherein calculating the time slot mapping relationship corresponding to the first orchestration period length for the egress ports between each pair of adjacent nodes, according to the time slot mapping relationship corresponding to the first orchestration period length for the egress port and the ingress port between each pair of adjacent nodes, comprises:
calculating, for each pair of adjacent nodes, an offset between a moment when a tail end of the third transmission time slot of the egress port of the upstream node arrives at the egress port of the downstream node and a start time of an orchestration period having the first orchestration period length of the egress port of the downstream node, according to the first transmission time slot of the egress port of the upstream node, the third transmission time slot of the egress port of the upstream node, the second transmission time slot of the ingress port of the downstream node, a remaining time from a moment when a tail end of the first transmission time slot of the egress port of the upstream node is mapped to the second transmission time slot of the ingress port of the downstream node to an end time of the second transmission time slot of the ingress port of the downstream node, the first orchestration period length and time slot length, and the forwarding delay;
calculating the fourth transmission time slot of the egress port of the downstream node according to the offset and the time slot length;
calculating a remaining time from a moment when a tail end of the third transmission time slot of the egress port of the upstream node is mapped to the fourth transmission time slot of the egress port of the downstream node to an end time of the fourth transmission time slot of the egress port of the downstream node, according to the fourth transmission time slot of the egress port of the downstream node, the offset, and the time slot length; and
obtaining a time slot mapping relationship for the egress ports between each pair of adjacent nodes, according to the egress port information for the upstream node, the third transmission time slot of the egress port of the upstream node, the egress port information for the downstream node, the fourth transmission time slot of the egress port of the downstream node, and the remaining time from a moment when a tail end of the third transmission time slot of the egress port of the upstream node is mapped to the fourth transmission time slot of the egress port of the downstream node to an end time of the fourth transmission time slot of the egress port of the downstream node.

5. The method according to claim 2, wherein in response to the time slot relative relationship comprising an orchestration period phase difference:
the orchestration period phase difference corresponding to the first orchestration period length for the egress port and the ingress port comprises egress port information for the upstream node, ingress port information for the downstream node, and a remaining time from a moment when a tail end of an orchestration period of the egress port of the upstream node is mapped to an orchestration period of the ingress port of the downstream node to an end time of the orchestration period of the ingress port of the downstream node; the orchestration period of the egress port of the upstream node is an orchestration period having the first orchestration period length of the egress port of the upstream node; the orchestration period of the ingress port of the downstream node is an orchestration period having the first orchestration period length of the ingress port of the downstream node; and
the time slot mapping relationship for the egress ports comprises the egress port information for the upstream node, the third transmission time slot of the egress port of the upstream node, the egress port information for the downstream node, the fourth transmission time slot of the egress port of the downstream node, and the remaining time from a moment when a tail end of the third transmission time slot of the egress port of the upstream node is mapped to the fourth transmission time slot of the egress port of the downstream node to an end time of the fourth transmission time slot of the egress port of the downstream node; the third transmission time slot of the egress port of the upstream node is a transmission time slot within an orchestration period having the first orchestration period length of the egress port of the upstream node; the fourth transmission time slot of the egress port of the downstream node is a transmission time slot within an orchestration period having the first orchestration period length of the egress port of the downstream node.

6. The method according to claim 5, wherein calculating a time slot mapping relationship for the egress ports between each pair of adjacent nodes, according to the orchestration period phase difference for the egress port and the ingress port between each pair of adjacent nodes, comprises:
calculating, for each pair of adjacent nodes, an offset between a moment when a tail end of the third transmission time slot of the egress port of the upstream node arrives at the egress port of the downstream node and a start time of an orchestration period having the first orchestration period length of the egress port of the downstream node, according to the third transmission time slot of the egress port of the upstream node, the remaining time from a moment when a tail end of an orchestration period of the egress port of the upstream node is mapped to an orchestration period of the ingress port of the downstream node to an end time of the orchestration period of the ingress port of the downstream node, the time slot length, the first orchestration period length, and the forwarding delay;
calculating the fourth transmission time slot of the egress port of the downstream node according to the offset and the time slot length;
calculating a remaining time from a moment when a tail end of the third transmission time slot of the egress port of the upstream node is mapped to the fourth transmission time slot of the egress port of the downstream node to an end time of the fourth transmission time slot of the egress port of the downstream node, according to the fourth transmission time slot of the egress port of the downstream node, the offset, and the time slot length; and
obtaining a time slot mapping relationship for the egress ports between each pair of adjacent nodes, according to the egress port information for the upstream node, the third transmission time slot of the egress port of the upstream node, the egress port information for the downstream node, the fourth transmission time slot of the egress port of the downstream node, and the remaining time from a moment when a tail end of the third transmission time slot of the egress port of the upstream node is mapped to the fourth transmission time slot of the egress port of the downstream node to an end time of the fourth transmission time slot of the egress port of the downstream node.

7. The method according to claim 3 or 5, wherein reserving time slot resources for each port in the target routing path according to the time slot mapping relationship for the egress ports between each pair of adjacent nodes and the forwarding delay of each node comprises:
acquiring, for each node, a node residence time budget; and
reserving time slot resources for each node in the target routing path according to the residence time budget for each node, the forwarding delay of each node, the fourth transmission time slot of the egress port of the downstream node, and the remaining time from a moment when a tail end of the third transmission time slot of the egress port of the upstream node is mapped to the fourth transmission time slot of the egress port of the downstream node to an end time of the fourth transmission time slot of the egress port of the downstream node.

8. The method according to claim 1, wherein the method further comprises:
acquiring the time slot relative relationship corresponding to the first orchestration period length for the egress port and the ingress port between the local node and a downstream node;
generating a first advertisement message comprising the time slot relative relationship corresponding to the first orchestration period length for the egress port and the ingress port between the local node and the downstream node; and
flooding the first advertisement message in the network.

9. The method according to claim 8, wherein the time slot relative relationship corresponding to the first orchestration period length for the egress port and the ingress port between the local node and the downstream node comprises: a time slot mapping relationship corresponding to the first orchestration period length for the egress port and the ingress port between the local node and the downstream node, or an orchestration period phase difference corresponding to the first orchestration period length for the egress port and the ingress port between the local node and the downstream node;
generating the first advertisement message comprising a time slot relative relationship corresponding to the first orchestration period length for the egress port and the ingress port between the local node and the downstream node comprises one of the following:
generating a first time slot mapping Sub-TLV comprising the time slot mapping relationship corresponding to the first orchestration period length for the egress port and the ingress port between the local node and the downstream node, and generating the first advertisement message according to the first time slot mapping Sub-TLV; or
generating a first orchestration period phase difference Sub-TLV comprising the orchestration period phase difference corresponding to the first orchestration period length for the egress port and the ingress port between the local node and the downstream node, and generating the first advertisement message according to the first orchestration period phase difference Sub-TLV.

10. The method according to claim 1, wherein the method further comprises:
acquiring a time slot relative relationship corresponding to the first orchestration period length for the egress port and the ingress port between an upstream node and the local node;
generating a second advertisement message comprising the time slot relative relationship corresponding to the first orchestration period length for the egress port and the ingress port between the upstream node and the local node; and
flooding the second advertisement message on the network.

11. The method according to claim 10, wherein the time slot relative relationship corresponding to the first orchestration period length for the egress port and the ingress port between the upstream node and the local node comprises a time slot mapping relationship corresponding to the first orchestration period length for the egress port and the ingress port between the upstream node and the local node, or an orchestration period phase difference corresponding to the first orchestration period length for the egress port and the ingress port between the upstream node and the local node;
generating the second advertisement message comprising the time slot relative relationship corresponding to the first orchestration period length for the egress port and the ingress port between the upstream node and the local node comprises one of the following:
generating a second time slot mapping Sub-TLV comprising the time slot mapping relationship corresponding to the first orchestration period length for the egress port and the ingress port between the upstream node and the local node, and generating the second advertisement message based on the second time slot mapping Sub-TLV; or
generating a second orchestration period phase difference Sub-TLV comprising the orchestration period phase difference corresponding to the first orchestration period length for the egress port and the ingress port between the upstream node and the local node, and generating the second advertisement message based on the second orchestration period phase difference Sub-TLV.

12. The method according to claim 1, wherein the method further comprises:
acquiring the forwarding delay of the local node;
generating a third advertisement message comprising the forwarding delay of the local node; and
flooding the third advertisement message on the network.

13. The method according to claim 12, wherein generating the third advertisement message comprising the forwarding delay of the local node comprises:
generating a forwarding delay Sub-TLV comprising the forwarding delay of the local node; and
generating the third advertisement message based on the forwarding delay Sub-TLV.

14. The method according to claim 1, wherein the method is applied to a network controller, and the method further comprises:
receiving a fourth advertisement message sent by a target node, wherein the fourth advertisement message comprises at least one of the following:
a time slot mapping TLV comprising the time slot mapping relationship for the egress port and the ingress port between two adjacent nodes;
an orchestration period phase difference TLV comprising the orchestration period phase difference for the egress port and the ingress port between two adjacent nodes;
a scheduling capability TLV comprising the first orchestration period length and the time slot length; or
a forwarding delay TLV comprising the forwarding delay.

15. A communication device, comprising: a memory, a processor, and a computer program stored in the memory and executable on the processor, wherein the processor, when executing the computer program, implements the time slot resource reservation method according to any one of claims 1 to 14.

16. A computer-readable storage medium, storing computer-executable instructions, the computer-executable instructions being configured to execute the time slot resource reservation method according to any one of claims 1 to 14.
